# FASCICULE DE BREVET EUROPEEN

(11) **EP 1 407 182 B1**
(45) Date de publication et mention de la délivrance du brevet: **08.06.2005**
(21) Numéro de dépôt: 02767539.6
(22) Date de dépôt: 01.07.2002
(51) Int. Cl.: F16L 33/01

(54) **EMBOUT POUR CONDUITE FLEXIBLE SANS VO TE DE PRESSION ET SON PROCEDE DE FABRICATION**
ENDANSCHLUSSSTÜCK FÜR SCHLAUCH OHNE DRUCKGEWÖLBE UND HERSTELLUNGSVERFAHREN DAFÜR
END-FITTING FOR FLEXIBLE HOSE WITHOUT PRESSURE ARCH AND METHOD FOR MAKING SAME

(30) Priorité: 05.07.2001 FR 0108941
(43) Date de publication de la demande: 14.04.2004
(73) Titulaire: TECHNIP FRANCE, 92400 Courbevoie (FR)
(72) Inventeur: BERTON, Hugues, F-76940 La Mailleraye-sur-Seine (FR); LECLERC, Olivier, F-76330 Norville (FR)
(74) Mandataire: Bertrand, Didier
(86) Numéro de dépôt international: PCT/FR2002/002281
(87) Numéro de publication internationale: WO 2003/004921

(56) Documents cités:
- WO-A-99/19655
- US-A- 6 039 083

## Description

La présente invention concerne un embout pour conduite flexible pour véhiculer sur de grandes distances un fluide sous pression et le cas échéant sous haute température, tel qu'un gaz, du pétrole, de l'eau ou d'autres fluides. L'invention vise plus précisément un embout pour une conduite flexible sans voûte de pression destinée à une exploitation pétrolière en mer.

Les conduites flexibles utilisées en mer doivent pouvoir résister à des pressions internes et/ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les recommandations API 17 B et API 17 J établies par l'American Petroleum Institute sous l'intitulé "Recommended Practice for Flexible Pipe" and "Specification for Unbonded Flexible Pipe".

Une conduite flexible comprend généralement de l'intérieur vers l'extérieur :
- une gaine d'étanchéité interne, réalisée en matière plastique généralement polymère, résistant à l'action chimique du fluide à transporter ;
- éventuellement une voûte de pression résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ; les fils de forme ont une section en Z ou en T ou leurs dérivés (teta ou zeta), en U, ou en I ;
- au moins une nappe (et généralement au moins deux nappes croisées) d'armures de traction enroulées à pas long ; l'angle d'armage mesuré sur l'axe longitudinal de la conduite est par exemple sensiblement égal à 55°; et
- une gaine de protection et d'étanchéité externe en polymère.

Une telle conduite peut être à passage interne lisse quand le passage est directement formé par la gaine d'étanchéité (elle est alors dite "smooth bore") ou à passage non-lisse ("rough bore") quand on prévoit en outre à l'intérieur de la gaine d'étanchéité interne une carcasse constituée d'un feuillard agrafé qui sert à empêcher l'écrasement de la conduite sous la pression externe.

La voûte de pression, destinée essentiellement à résister à la pression interne n'est pas nécessaire dans toutes les situations et, compte tenu du surcoût qu'elle engendre, on préfère utiliser une conduite sans voûte de pression chaque fois que les circonstances le permettent. Une telle conduite sans voûte de pression est principalement utilisée en tant que colonne montante ("riser") ou en tant que conduite de transport ("flowline") dans des applications basse pression, c'est-à-dire lorsque la pression interne ou pression de service est relativement basse.

L'invention vise donc de telles conduites flexibles sans voûte de pression, et plus particulièrement des conduites de ce type comprenant aussi une carcasse interne (conduites "rough bore").

Les embouts des conduites, destinés à leurs connexions entre elles ou avec des équipements terminaux, sont également définis dans les recommandations API 17J, et doivent être réalisés dans des conditions assurant à la fois une bonne solidarisation et une bonne étanchéité. Celles-ci sont généralement obtenues par un sertissage de la gaine, c'est-à-dire par une pénétration radiale partielle d'un élément rigide dans la gaine.

On connaît plusieurs types d'embouts pour les conduites flexibles utilisant le principe du sertissage de la gaine interne, notamment par les documents FR 2 214 852 ou WO 99/19655 ou encore par le document WO97/25564 au nom de la Demanderesse et la demande française 0014338 du 8 novembre 2000 également au nom de la Demanderesse. Ce dernier document décrit notamment un embout de fixation pour une conduite tubulaire flexible comprenant au moins, de l'intérieur vers l'extérieur : une gaine d'étanchéité interne réalisée en matière plastique, au moins une nappe d'armures de traction enroulées à pas long et une gaine de protection et d'étanchéité externe, l'embout comportant une première partie annulaire (généralement appelée voûte de l'embout) sur laquelle peut prendre appui une première bride de sertissage munie d'un cône de sertissage de la gaine intérieure et une seconde partie annulaire (généralement appelée capot) entourant et prolongeant vers l'arrière la première partie annulaire et sur laquelle peut prendre appui une seconde bride de sertissage munie d'un cône de sertissage de la gaine externe coopérant avec une canule arrière d'appui de sertissage, la seconde partie annulaire définissant avec la première partie annulaire un espace annulaire dans lequel sont disposées les armures de manière à ce qu'elles soient décollées radialement de la gaine interne afin de passer autour de la première bride de sertissage et de la première partie annulaire pour y être fixées ; l'embout comporte un collier de blocage des armures entre la première bride de sertissage et la seconde bride de sertissage ; l'espace annulaire précité est destiné à être rempli d'une matière de remplissage telle qu'une résine qui vient bloquer les divers éléments compris dans cet espace.

La mise en place d'un tel embout se fait de manière connue selon les étapes suivantes :
- On découpe la gaine externe.
- On introduit la canule arrière d'appui sous l'extrémité découpée de la gaine externe.
- On met en place le collier de blocage des armures devant la canule.
- On retourne la nappe d'armure ou successivement les deux nappes d'armure vers l'arrière.
- On met en place la bride de sertissage avant.
- On met en place la voûte de l'embout, en assurant l'étanchéité au niveau de la gaine interne.
- On replie les armures vers l'avant.
- On visse le capot de l'embout sur la voûte de l'embout.
- On sertit la bride arrière , en assurant l'étanchéité au niveau de la gaine externe.
- On dispose l'embout verticalement pour le remplir de résine telle que l'araldite ® ou une matière analogue.

Toutefois, les embouts illustrés dans l'art antérieur cité plus haut et le procédé de mise en place concernent des conduites qui comprennent, entre la gaine interne et la couche d'armures, une voûte de pression.

Or les conduites sans voûte de pression, auxquelles la présente invention est destinée, présentent un problème particulier lié à l'absence de voûte de pression. On s'est en effet aperçu que les embouts de ces conduites sont plus sujets que les autres à des problèmes d'endommagement de la gaine interne provoquant la destruction de l'embout. Ces problèmes sont le plus souvent liés à un fluage de la gaine interne qui se produit notamment aux endroits où apparaît un défaut de remplissage de résine, défaut pouvant être dû à des bulles d'air piégées au niveau de la bride de sertissage avant ou à des problèmes de fluidité dudit remplissage. C'est ce problème que l'invention vise à résoudre.

L'invention atteint son but grâce à un embout de fixation pour une conduite tubulaire flexible comprenant au moins, de l'intérieur vers l'extérieur : une gaine d'étanchéité interne réalisée en matière plastique, au moins une nappe d'armures de traction enroulées à pas long sur la gaine interne et une gaine de protection et d'étanchéité externe, l'embout comportant une première partie annulaire sur laquelle peut prendre appui une bride de sertissage de la gaine intérieure et une seconde partie annulaire prolongeant la première partie annulaire et venant réaliser l'étanchéité sur la gaine externe, la seconde partie annulaire définissant avec la première partie annulaire un espace annulaire dans lequel sont disposées les armures de manière à décoller de la gaine interne et à passer autour de la bride de sertissage et de la première partie annulaire, cet espace étant destiné à être rempli d'une matière de remplissage, l'embout comportant encore un collier de blocage des armures en arrière de la bride de sertissage, caractérisé en ce que l'embout comporte également un anneau disposé autour de la gaine interne juste en avant de l'endroit du décollement radial des armures au niveau du collier de blocage des armures.

On s'est en effet aperçu selon l'invention qu'en l'absence de dispositions spéciales au niveau du décollement des armures de la gaine interne, il se forme un espace entre les armures et la gaine interne difficilement accessible à la matière de remplissage lors de l'étape finale de préparation de l'embout. Cet espace non rempli permet à la gaine interne de fluer vers l'extérieur à cet endroit, occasionnant des amorces de fissures dans ladite gaine, pouvant amener à la destruction de l'embout. Un tel problème ne se pose pas avec les conduites à voûtes de pression parce que la voûte s'oppose au fluage de la gaine. La présence de l'anneau conforme à l'invention permet de définir un espace entre l'anneau et le point de contact des armures sur la gaine suffisamment réduit pour empêcher ladite gaine interne de fluer de manière critique lorsque cet espace n'est pas rempli par la résine. Il est par exemple avantageux de positionner et de dimensionner l'anneau conique pour que le fluage maximum autorisé reste en deçà des recommandations de l'API 17 J, c'est-à-dire corresponde à un fluage résiduel (fluage restant une fois que la pression de service est stoppée) entraînant une réduction d'épaisseur de la gaine inférieure à 30%.

Avantageusement, l'anneau est conique, c'est-à-dire qu'il comporte une portée sensiblement conique, tournée vers le décollement radial des armures. Cette portée peut éventuellement être légèrement concave. L'extrémité mince de l'anneau conique, tournée vers le décollement, est arrondie ou autrement émoussée de manière à ne pas endommager la gaine ni les armures lors de la mise en place de l'anneau.

Afin de permettre un bon positionnement de l'anneau conique, garantissant qu'il ne restera pas d'espace notable non rempli de résine après l'étape finale de préparation de l'embout, il est avantageux de faciliter un retournement homogène et bien positionné des armures des nappes d'armure. Le collier de blocage des armures est conçu à cet effet. D'une part, sont prévus des moyens de positionnement et de blocage du collier par rapport à une surface de référence, par exemple la canule arrière de sertissage enfoncée sous la gaine externe, qui permettent d'assurer le positionnement du collier dans un plan orthogonal à l'axe de la conduite : le collier peut être calé directement contre ladite canule ou bien par l'intermédiaire d'une entretoise. D'autre part, le collier comporte des moyens de coudage des armures, permettant d'obtenir pour chacune des armures une courbure sensiblement identique vers l'arrière ; ces moyens de coudage sont avantageusement constitués par une forme arrondie, notamment torique, donnée à une partie avant du collier, contre laquelle les armures vont être retournées au niveau du décollement radial des armures. Le collier de blocage est réalisé en plusieurs parties, avantageusement en trois parties angulaires assemblables par vis, pour pouvoir être disposé autour des armures sans être enfilé.

Afin d'assurer que l'anneau conique restera bien placé pendant tout le temps de la préparation de l'embout, il est avantageux d'introduire, éventuellement à force, entre l'arrière de la première bride de sertissage et l'anneau conique, une entretoise de sollicitation de l'anneau, par exemple réalisée en deux parties qu'on peut fixer provisoirement par des fixations adaptées sur la voûte de l'embout. Cette entretoise permet de vérifier que lors du montage de la voûte de l'embout et du sertissage de la bride avant, l'anneau ne s'est pas déplacé ; elle permet également de maintenir la position de l'anneau une fois la bride sertie.

L'étanchéité au niveau des gaines externe et interne est réalisée par des dispositifs connus en soi tels que des douilles coniques associées aux brides de sertissage.

L'invention concerne également le procédé de fabrication et de mise en place de l'embout conforme à l'invention, à savoir un procédé de fabrication d'un embout de fixation pour une conduite tubulaire flexible comprenant au moins, de l'intérieur vers l'extérieur : une gaine d'étanchéité interne réalisée en matière plastique, au moins une nappe d'armures de traction enroulées à pas long sur la gaine interne et une gaine de protection et d'étanchéité externe, l'embout comportant une première partie annulaire sur laquelle peut prendre appui une bride de sertissage de la gaine intérieure et une seconde partie annulaire entourant et prolongeant la première partie annulaire pour venir réaliser l'étanchéité sur la gaine externe, la seconde partie annulaire définissant avec la première partie annulaire un espace annulaire dans lequel sont disposées les armures de manière à décoller de la gaine interne et à passer autour de la première bride de sertissage et de la première partie annulaire, cet espace étant rempli d'une matière de remplissage, l'embout comportant encore un collier de blocage des armures en arrière de la bride de sertissage, le procédé comprenant notamment les étapes selon lesquelles :
a) On découpe la gaine externe,
b) On introduit, le cas échéant, une canule arrière d'appui sous l'extrémité découpée de la gaine externe,
c) On met en place le collier de blocage des armures,
d) On retourne successivement les deux nappes d'armure vers l'arrière en les coudant sur l'avant du collier de blocage,
e) On met en place en l'enfilant sur l'extrémité avant de la conduite la bride de sertissage,
f) On met en place la première partie annulaire de l'embout autour de la conduite,
g) On replie les armures vers l'avant et on vient les placer autour de la première partie annulaire,
h) On fixe la seconde partie annulaire de l'embout sur la première partie annulaire de l'embout,
i) On remplit l'espace annulaire d'une matière de remplissage, caractérisé en ce que, avant l'étape de remise en place des armures et de préférence entre l'étape d et l'étape e, on enfile sur la conduite un anneau qu'on positionne à la naissance du décollement radial des armures, de sorte qu'il soit sensiblement en contact avec toutes les armures retournées.

Avantageusement, entre l'étape f et l'étape g, on introduit entre la première bride de sertissage et l'anneau une entretoise annulaire.

D'autres avantages et caractéristiques seront mis en évidence à la lecture de la description qui suit, en référence aux dessins schématiques annexés sur lesquels :

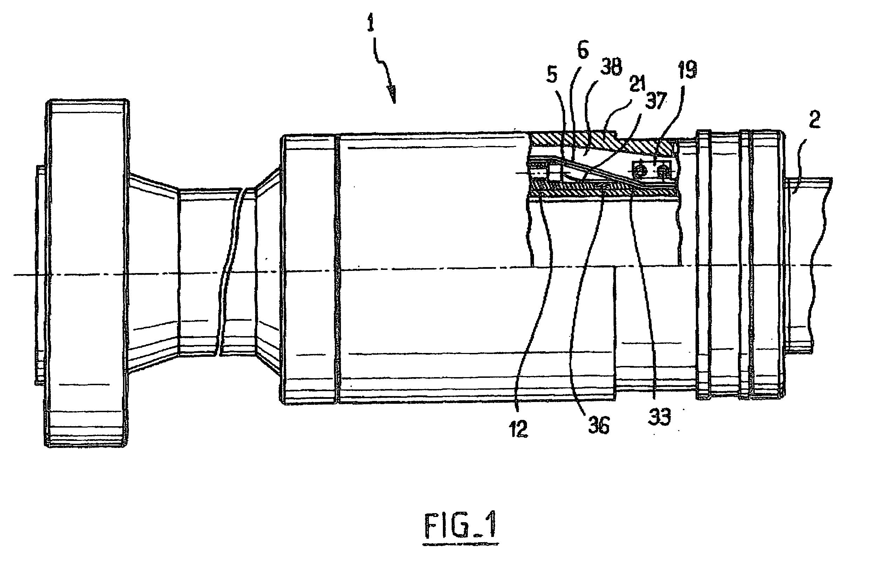

La figure 1 est une vue de côté d'un embout, avec une partie en coupe longitudinale montrant le collier de blocage et l'anneau conique conforme à l'invention au niveau du décollement radial des armures,

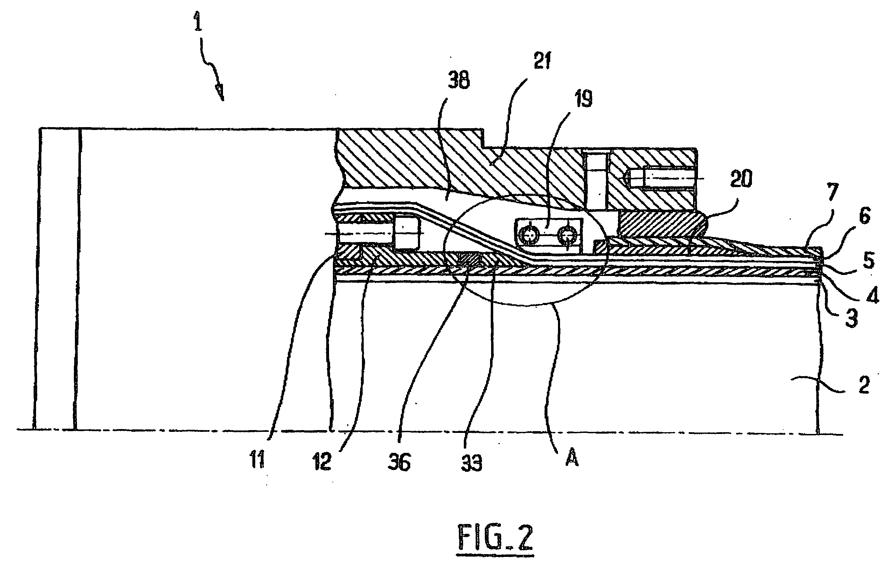

La figure 2 est une vue agrandie de ladite partie montrant le collier de blocage et l'anneau conique,
La figure 3 est une vue agrandie du détail A de la figure 2,
La figure 4 est une vue similaire à celle de la figure 3, à une étape antérieure de fabrication, lors du retournement des armures,
La figure 5 est une vue similaire montrant la bague conique positionnée avec les armures retournées,
La figure 6 est une vue similaire avec l'entretoise et la bride de sertissage.

L'embout représenté généralement sous la référence 1 est destiné à équiper une conduite de type "rough bore" 2 qui comprend, de l'intérieur vers l'extérieur, une carcasse 3 réalisée par un enroulement à pas court de feuillard agrafé, une gaine d'étanchéité interne polymérique 4, une armure résistant à la traction axiale dans le sens longitudinal de la conduite et constituée d'une paire de nappes d'armures croisées 5, 6 d'enroulement à pas long en sens contraire, et une gaine d'étanchéité externe polymérique 7. L'enroulement à pas long est préférentiellement effectué à un angle proche d'un angle appelé angle d'équilibre qui est défini par le calcul et est sensiblement égal à 55° ; cet angle d'armage permet, dans les conduites sans voûte de pression, aux armures de reprendre la composante circonférentielle de pression interne.

L'embout 1 comprend une première partie annulaire avant formée par la voûte 11 de l'embout à laquelle est associée la bride de sertissage 12. Le serrage de la bride 12 sur la voûte 11 de l'embout permet de réaliser l'étanchéité au niveau de la gaine interne 4 grâce à des dispositifs de type connu en soi et non représentés sur ces figures. L'embout comprend une deuxième partie annulaire 21 arrière formée par un capot qui vient autour de la partie annulaire avant 11. Ce capot entoure la première partie annulaire pour être fixé à la voûte 11 de l'embout, comme par exemple par une liaison filetée dans la zone avant de l'embout. La partie annulaire arrière 21 vient assurer l'étanchéité avec la gaine externe dans la zone arrière de l'embout, ladite étanchéité pouvant être obtenue par tout dispositif connu en soi, par exemple, une bride de sertissage du type montré dans l'art antérieur.

Un collier 19 en trois parties bloque les armures 5, 6 en position à l'arrière de la bride de sertissage 12 et une canule effilée arrière 20 s'introduit entre la gaine extérieure 7 et les armures 6.

Le capot 21 comporte un ou plusieurs orifices destinés à injecter une résine (par exemple Araldite ®) dans l'embout de manière à remplir le volume annulaire 38 situé entre les première et deuxième parties annulaires.

Des moyens de dégazage non représentés permettent de drainer le gaz situé au niveau des armures vers l'extérieure de la conduite, ces moyens pouvant être formés par un tube et une soupape associée.

Les armures 5, 6 qui sont bloquées par le collier 19 "décollent" radialement de la gaine interne 4 juste en avant dudit collier 19 et viennent passer autour de la bride de sertissage 12 et d'une partie externe de la voûte 11 de l'embout pour être fixées vers leurs extrémités (non visibles sur les figures) par des colliers dans la zone avant de l'embout.

Les figures montrent l'anneau conique 33 disposé sur la gaine interne 4 juste devant le décollement des armures 5, 6. Cet anneau comporte une portée conique 34 à l'arrière, arrondie à son extrémité amincie arrière 35 de manière à ne pas risquer d'endommager la gaine ni les armures. La portée conique 34 peut être légèrement concave. Elle forme avantageusement un angle assez faible par rapport à l'axe de la conduite, par exemple d'environ 20°. Cet angle de 20° n'est toutefois pas limitatif, et on peut même utiliser un anneau cylindrique (angle nul). L'épaisseur de l'extrémité arrière arrondie 35 est choisie en fonction des caractéristiques dimensionnelles de la conduite, de la matière utilisée pour réaliser la gaine interne ainsi que de la pression de service de la conduite ; elle peut par exemple être de l'ordre de 1 mm pour certaines applications, sans que ceci soit limitatif.

Entre l'anneau conique 33 et la partie arrière de la bride de sertissage 12 est disposée une entretoise annulaire 36 réalisée en plusieurs parties, par exemple en deux parties, pour pouvoir être disposée en fin de montage entre l'anneau conique 33 et la bride de sertissage 12. Ces deux parties de l'entretoise peuvent être retenues par des pièces de maintien 37 par exemple soudées à l'arrière de la voûte 11 de l'embout ; après remplissage de l'embout par la résine, elles sont maintenues en place par la résine. La fonction de cette entretoise 36 est d'une part d'assurer le blocage en position de l'anneau conique 33 en le sollicitant vers les armures 5, 6, une fois la bride de sertissage 12 sertie sur la gaine interne 4 d'autre part de permettre de combler d'éventuels jeux dus à un mouvement d'avance de la bride 12 lors de son sertissage.

Le collier 19 de blocage qui est réalisé en plusieurs parties, avantageusement trois, pour pouvoir être disposé facilement autour des armures 5, 6, comporte des vis de serrage 38 des différentes parties entre elles. Le collier 19 peut s'appuyer sur l'avant en forme de rebord radial 20' de la canule arrière 20 directement ou par l'intermédiaire d'une entretoise non représentée. Dans les deux cas, le collier 19 est ainsi positionné de manière précise par rapport à une surface de référence. La canule arrière 20 et l'éventuelle entretoise que l'on positionne entre le collier 19 et la canule arrière 20 forment au moins partiellement les moyens de positionnement du collier 19 qui assurent son orthogonalité par rapport à l'axe de la conduite. Le collier 19 présente à l'avant, entre sa face cylindrique intérieure 39 et sa face frontale avant 40 une partie de transition 41 convexe, par exemple torique, permettant de faciliter le retournement des armures 5, 6 vers l'arrière lors du montage de l'embout et la mise en place de l'anneau conique 33. Le collier 19 permet ainsi, de par sa géométrie et son positionnement précis dans le plan orthogonal, d'obtenir un retournement des armures où les armures 5, 6 d'une même nappe possèdent un rayon de courbure identique. Les moyens de coudage des armures (partie de transition 41) permettent aux fils d'une même nappe d'armure d'être coudés de façon identique et répétitive à un décalage angulaire près ; la combinaison des moyens de positionnement et des moyens de coudage permet d'obtenir un coudage similaire de chacun des fils de la nappe intérieure, coudage prenant naissance dans un même plan de référence transversal orthogonal à l'axe de la conduite.

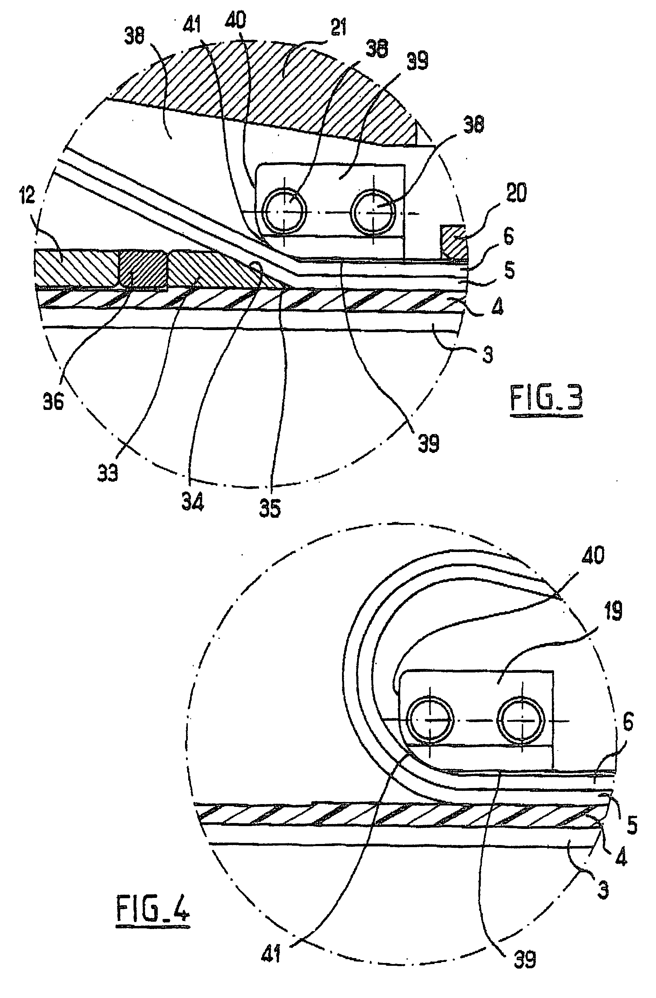

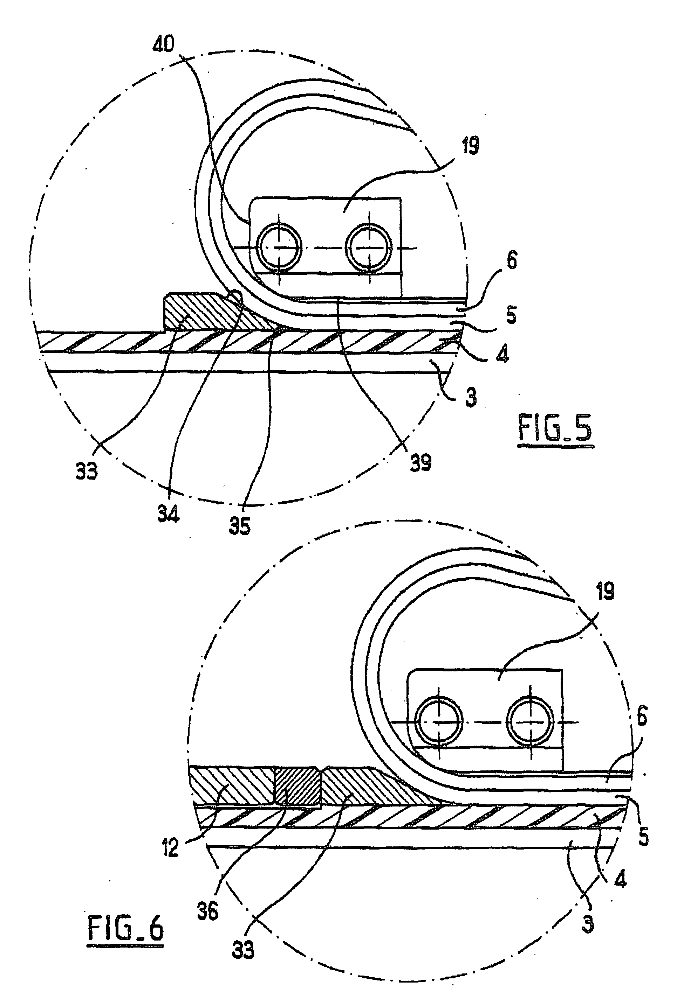

Le montage de l'embout de l'invention est le suivant et est illustré en particulier sur les figures 3 à 6.
- On découpe la gaine externe 7.
- On introduit la canule arrière d'appui 20 sous l'extrémité découpée de la gaine externe 7.
- On met en place le collier 19 de blocage et de retournement des armures devant la canule 20, en le positionnant précisément par rapport à cette dernière.
- On retourne successivement (figure 4) les deux nappes d'armure 5, 6 vers l'arrière en les coudant sur l'avant du collier de blocage et de retournement 19.
- On enfile (figure 5) sur la conduite 2 l'anneau conique 33 et on le positionne jusqu'à venir à la naissance du décollement radial des armures, de sorte qu'il soit en contact avec toutes les armures retournées de la nappe 5 enroulée sur la gaine ou en tout cas ne laisse pas un intervalle supérieur à un seuil prédéterminé (par exemple entre 1 et 3 mm) qu'on peut contrôler par un gabarit adapté.
- On met en place en l'enfilant sur l'extrémité avant de la conduite 2 la bride de sertissage avant 12.
- On met en place la voûte 11 de l'embout 1; et on fixe la bride de sertissage 12 à la voûte 11, ce qui assure l'étanchéité au niveau de la gaine interne 4.
- On introduit (figure 6) entre la première bride de sertissage 12 et l'anneau conique 33 l'entretoise annulaire 36 en deux parties qu'on fixe sur la voûte 11 par les fixations 37.
- On replie les armures 5, 6 vers l'avant (figure 3), cellés-ci étant maintenues à l'écart de la gaine interne 4 par l'anneau conique 33. On vient successivement placer les deux nappes d'armures 5, 6 autour de la voûte 11 de l'embout où elles sont fixées par des colliers après avoir été mises à longueur.
- On visse le capot 21 de l'embout sur la voûte 11 de l'embout en réalisant l'étanchéité au niveau de la gaine externe 7.
- Enfin, on dispose l'embout verticalement pour remplir l'espace 38 de résine telle que l'araldite ® ou une matière analogue.

On comprend que la mise en place de l'anneau 33 s'effectue correctement en raison de la présence du collier 19 qui coopère donc avec lui, cette coopération étant à même d'assurer un espace réduit entre l'extrémité de l'anneau 33 et le point de contact des armures 5,6 avec la gaine interne 4. La combinaison du collier 19 et de l'anneau 33 avec leur forme spécifique permet avantageusement d'obtenir que le positionnement de l'anneau 33 s'effectue de façon à limiter l'espace dans lequel la gaine interne 4 serait susceptible de fluer si l'araldite ® venait à ne pas remplir cet espace. La portée conique de l'anneau 33 et la zone convexe courbe du collier 19 sont les formes qui permettent une coopération efficace et un positionnement précis des armures 5,6. Il est également important d'associer l'entretoise 36 à l'obtention du bon positionnement de l'anneau 33 et donc de cet espace réduit

## Revendications

1. Embout (1) de fixation pour une conduite tubulaire flexible (2) comprenant au moins, de l'intérieur vers l'extérieur : une gaine d'étanchéité interne (3) réalisée en matière plastique, au moins une nappe d'armures de traction (5, 6) enroulées à pas long sur la gaine interne (3) et une gaine (7) de protection et d'étanchéité externe, l'embout (1) comportant une première partie annulaire (11) sur laquelle peut prendre appui une bride (12) de sertissage de la gaine interne et une seconde partie annulaire (21) entourant et prolongeant la première partie annulaire (11) et venant former l'étanchéité sur la gaine externe (7), la seconde partie annulaire (21) définissant avec la première partie annulaire (11) un espace annulaire (38) dans lequel sont disposées les armures (5, 6) de manière à décoller de la gaine interne (4) et à passer autour de la bride de sertissage (12) et de la première partie annulaire (11), cet espace (38) étant rempli d'une matière de remplissage, l'embout (1) comportant encore un collier de blocage (19) des armures en arrière de la bride de sertissage (12), **caractérisé en ce que** l'embout (1) comporte également un anneau (33) disposé autour de la gaine interne (4) juste en avant du décollement des armures (5, 6) au niveau du collier (19) de blocage des armures.

2. Embout selon la revendication 1, **caractérisé en ce que** l'anneau (33) est conique et comporte une portée sensiblement conique (34) tournée vers le décollement radial des armures.

3. Embout selon l'une quelconque des revendications 1 ou 2, **caractérisé en ce qu'**il comporte des moyens de positionnement axial du collier de blocage (19) par rapport à une surface de référence.

4. Embout selon l'une quelconque des revendications 1 à 3, **caractérisé en ce que** le collier de blocage (19) comprend des moyens de coudage des armures.

5. Embout selon la revendication 4, **caractérisé en ce que** les moyens de coudage d'armure sont constitués par une partie arrondie (41) à l'avant du collier de blocage (19).

6. Embout selon l'une quelconque des revendications 1 à 5, **caractérisé en ce que** le collier de blocage (19) est réalisé en plusieurs parties.

7. Embout selon l'une quelconque des revendications 1 à 6, **caractérisé en ce qu'**il est prévu une entretoise (36) en plusieurs parties entre la première bride de sertissage (12) et l'anneau conique (33).

8. Procédé de fabrication d'un embout (1) de fixation pour une conduite tubulaire flexible (2) comprenant au moins, de l'intérieur vers l'extérieur : une gaine d'étanchéité interne (3) réalisée en matière plastique, au moins une nappe d'armures de traction (5, 6) enroulées à pas long sur la gaine interne (3) et une gaine (7) de protection et d'étanchéité externe, l'embout (1) comportant une première partie annulaire (11) sur laquelle peut prendre appui une bride (12) de sertissage de la gaine intérieure et une seconde partie annulaire (21) entourant et prolongeant la première partie annulaire (11) et venant réaliser l'étanchéité sur la gaine externe (7), la seconde partie annulaire (21) définissant avec la première partie annulaire (11) un espace annulaire (38) dans lequel sont disposées les armures (5, 6) de manière à décoller de la gaine interne (4) et à passer autour de la bride de sertissage (12) et de la première partie annulaire (11), cet espace (38) étant rempli d'une matière de remplissage, l'embout (1) comportant encore un collier de blocage (19) des armures en arrière de la bride de sertissage (12), le procédé comprenant notamment les étapes selon lesquelles :
a) On découpe la gaine externe (7),
b) On met en place le collier (19) de blocage des armures,
c) On retourne successivement les deux nappes d'armure (5, 6) vers l'arrière en les coudant sur l'avant du collier de blocage (19),
d) On met en place en l'enfilant sur l'extrémité avant de la conduite (2) la bride de sertissage (12),
e) On met en place la première partie annulaire (11) de l'embout (1) autour de la conduite,
f) On replie les armures (5, 6) vers l'avant et on vient les placer autour de la première partie annulaire (11),
g) On fixe la seconde partie annulaire (21) de l'embout sur la première partie annulaire (11) de l'embout,
h) On remplit l'espace annulaire (38) d'une matière de remplissage, **caractérisé en ce que**, avant l'étape de remise en place des armures (6, 7) et de préférence entre l'étape c et l'étape d, on enfile sur la conduite (2) un anneau (33) qu'on positionne à la naissance du décollement radial des armures, de manière qu'il soit sensiblement en contact avec toutes les armures retournées de la nappe (5) enroulée sur la gaine interne.

9. Procédé selon la revendication 8, **caractérisé en ce que**, entre l'étape e et l'étape f, on introduit entre la première bride de sertissage (12) et l'anneau conique (33) une entretoise annulaire (36).

## Patentansprüche

1. Befestigungsstutzen (1) für eine flexible Rohrleitung (2), der von innen nach außen wenigstens umfasst: eine innere Dichtungshülle (3), die aus Kunststoff verwirklicht ist, wenigstens eine Lage (5, 6) aus Zugbewehrungen, die mit großer Steigung auf die innere Hülle (3) gewickelt ist, und eine äußere Schutz- und Dichtungshülle (7), wobei der Stutzen (1) einen ersten ringförmigen Teil (11), auf dem sich ein Bördelflansch (12) der inneren Hülle abstützen kann, und einen zweiten ringförmigen Teil (21), der den ersten ringförmigen Teil (11) umgibt und verlängert und die Dichtung an der äußeren Hülle (7) bildet, umfasst, wobei der zweite ringförmige Teil (21) mit dem ersten ringförmigen Teil (11) einen Ringraum (38) definiert, in dem die Bewehrungen (5, 6) in der Weise angeordnet sind, dass sie sich von der inneren Hülle (4) lösen und um den Bördelflansch (12) sowie um den ersten ringförmigen Teil (11) verlaufen, wobei dieser Raum (38) mit einem Befüllungsmaterial befüllt ist, wobei der Stutzen (1) außerdem einen Blockierreif (19) für die Bewehrungen hinter dem Bördelflansch (12) aufweist, **dadurch gekennzeichnet, dass** der Stutzen (1) außerdem einen Ring (33) umfasst, der um die innere Hülle (4) direkt vor der Ablösung der Bewehrungen (5, 6) auf Höhe des Blockierreifs (19) der Bewehrungen angeordnet ist.

2. Stutzen nach Anspruch 1, **dadurch gekennzeichnet, dass** der Ring (33) konisch ist und einen im Wesentlichen konischen Bereich (34) aufweist, der zur radialen Ablösung der Bewehrungen gewendet ist.

3. Stutzen nach einem der Ansprüche 1 oder 2, **dadurch gekennzeichnet, dass** er Mittel zur axialen Positionierung des Blockierreifs (19) in Bezug auf eine Bezugsoberfläche aufweist.

4. Stutzen nach einem der Ansprüche 1 bis 3, **dadurch gekennzeichnet, dass** der Blockierreif (19) Mittel zum Kröpfen der Bewehrungen umfasst.

5. Stutzen nach Anspruch 4, **dadurch gekennzeichnet, dass** die Bewehrungskröpfungsmittel aus einem abgerundeten Teil (41) vor dem Blockierreif (19) gebildet sind.

6. Stutzen nach einem der Ansprüche 1 bis 5, **dadurch gekennzeichnet, dass** der Blockierreif (19) aus mehreren Teilen verwirklicht ist.

7. Stutzen nach einem der Ansprüche 1 bis 6, **dadurch gekennzeichnet, dass** zwischen dem ersten Bördelflansch (12) und dem konischen Ring (33) ein Abstandshalter (36) aus mehreren Teilen vorgesehen ist.

8. Verfahren zur Herstellung eines Befestigungsstutzens (1) für eine flexible Rohrleitung (2), der von innen nach außen wenigstens umfasst: eine innere Dichtungshülle (3), die aus Kunststoff verwirklicht ist, wenigstens eine Lage (5, 6) von Zugbewehrungen, die mit großer Steigung auf die innere Hülle (3) gewickelt ist, und eine äußere Schutz- und Dichtungshülle (7), wobei der Stutzen (1) einen ersten ringförmigen Teil (11), auf dem sich ein Bördelflansch (12) der inneren Hülle abstützen kann, und einen zweiten ringförmigen Teil (21), der den ersten ringförmigen Teil (11) umgibt und verlängert und die Dichtung an der äußeren Hülle (7) schafft, umfasst, wobei der zweite ringförmige Teil (21) mit dem ersten ringförmigen Teil (11) einen Ringraum (38) definiert, in dem die Bewehrungen (5, 6) in der Weise angeordnet sind, dass sie sich von der inneren Hülle (4) lösen und um den Bördelflansch (12) und,den ersten ringförmigen Teil (11) verlaufen, wobei dieser Raum (38) mit einem Befüllungsmaterial befüllt ist, wobei der Stutzen (1) außerdem einen Blockierreif (19) für die Bewehrungen hinter dem Bördelflansch (12) aufweist, wobei das Verfahren insbesondere die Schritte umfasst, bei denen:
a) die äußere Hülle (7) abgeschnitten wird,
b) der Blockierreif (19) für die Bewehrungen angeordnet wird,
c) die zwei Bewehrungslagen (5, 6) allmählich nach hinten gebogen werden, indem sie an der Vorderseite des Blockierreifs (19) gekröpft werden,
d) der Bördelflansch (12) auf dem vorderen Ende der Leitung (2) angeordnet wird, indem er aufgeschoben wird,
e) der erste ringförmige Teil (11) des Stutzens um die Leitung angeordnet wird,
f) die Bewehrungen (5, 6) nach vorn umgebogen und um den ersten ringförmigen Teil (11) angeordnet werden,
g) der zweite ringförmige Teil (21) des Stutzens am ersten ringförmigen Teil (11) des Stutzens befestigt wird,
h) der Ringraum (38) mit einem Befüllungsmaterial befüllt wird,
**dadurch gekennzeichnet, dass** vor dem Schritt des Anordnens der Bewehrungen (6, 7) und vorzugsweise zwischen dem Schritt c und dem Schritt d auf die Leitung (2) ein Ring (33) aufgeschoben wird, der am Beginn der radialen Lösung der Bewehrungen positioniert wird, so dass er mit allen umgebogenen Bewehrungen der Lage (5), die auf die innere Hülle gewickelt ist, im Wesentlichen in Kontakt gelangt.

9. Verfahren nach Anspruch 8, **dadurch gekennzeichnet, dass** zwischen dem Schritt e und dem Schritt f zwischen den ersten Bördelflansch (12) und den konischen Ring (33) ein ringförmiger Abstandshalter (36) eingefügt wird.

## Claims

1. End-fitting (1) for fastening a flexible tubular pipe (2) comprising at least, from the inside outwards: an internal sealing sheath (3) made of plastic, at least one tensile armours ply (5, 6) wound with a long pitch over the internal sheath (3), and an external protective sealing sheath (7), the end-fitting (1) comprising a first annular part (11), on which a flange (12) for crimping the internal sheath can bear, and a second annular part (21) that surrounds and extends the first annular part (11) and forms a seal over the external sheath (7), the second annular part (21) defining with the first annular part (11) an annular space (38) in which the armours (5, 6) are placed so as to separate from the internal sheath (4) and to pass around the crimping flange (12) and the first annular part (11), this space (38) being filled with a filling material, the end-fitting (1) furthermore comprising a clamping strap (19) for clamping the armours to the rear of the crimping flange (12), **characterized in that** the end-fitting (1) also includes a ring (33) placed around the internal sheath (4) just in front of the point of separation of the armours (5, 6) at the clamping strap (19) for the armours.

2. End-fitting according to Claim 1, **characterized in that** the ring (33) is conical and has a substantially conical bearing surface (34) turned towards the point of radial separation of the armours.

3. End-fitting according to either of Claims 1 and 2, **characterized in that** it includes means for the axial positioning of the clamping strap (19) with respect to a reference surface.

4. End-fitting according to any one of Claims 1 to 3, **characterized in that** the clamping strap (19) comprises means for sharply bending the armours.

5. End-fitting according to Claim 4, **characterized in that** the means for sharply bending the armours are formed by a rounded part (41) to the front of the clamping strap (19).

6. End-fitting according to any one of Claims 1 to 5, **characterized in that** the clamping strap (19) is produced in several parts.

7. End-fitting according to any one of Claims 1 to 6, **characterized in that** a spacer (36) made of several parts is provided between the first crimping flange (12) and the conical ring (33).

8. Method of manufacturing an end-fitting (1) for fastening a flexible tubular pipe (2) comprising at least, from the inside outwards: an internal sealing sheath (3) made of plastic, at least one tensile armours ply (5, 6) wound with a long pitch over the internal sheath (3), and an external protective sealing sheath (7), the end-fitting (1) comprising a first annular part (11), on which a flange (12) for crimping the internal sheath can bear, and a second annular part (21) that surrounds and extends the first annular part (11) and forms a seal over the external sheath (7), the second annular part (21) defining with the first annular part (11) an annular space (38) in which the armours (5, 6) are placed so as to separate from the internal sheath (4) and to pass around the crimping flange (12) and the first annular part (11), this space (38) being filled with a filling material, the end-fitting (1) furthermore comprising a clamping strap (19) for clamping the armours to the rear of the crimping flange (12), the process comprising in particular the steps in which:
a) the external sheath (7) is cut;
b) the strap (19) for clamping the armours is put into position;
c) the two armour plies (5, 6) are turned back in succession towards the rear, by sharply bending them towards the front of the clamping strap (19);
d) the crimping flange (12) is put into place, by slipping it over the front end of the pipe (2);
e) the first annular part (11) of the end-fitting (1) is put into place around the pipe;
f) the armours (5, 6) are folded down towards the front and placed around the first annular part (11);
g) the second annular part (21) of the end-fitting is fastened to the first annular part (11) of the end-fitting; and
h) the annular space (38) is filled with a filling material, **characterized in that**, before the step of repositioning the armours (6, 7), and preferably between step c) and step d), a ring (33) is slipped over the pipe (2), said ring being positioned at the start of the point of radial separation of the armours, so that it is substantially in contact with all the turned-over armours of the ply (5) wound onto the internal sheath.

9. Method according to Claim 8, **characterized in that**, between step e) and step f), an annular spacer (36) is inserted between the first crimping flange (12) and the conical ring (33).
